# EUROPEAN PATENT APPLICATION

(11) **EP 2 081 272 A2**
(43) Date of publication of application: **22.07.2009**
(21) Application number: 09250108.9
(22) Date of filing: 16.01.2009
(51) Int. Cl.: H02J 3/14, H02J 13/00

(54) **A system for controlling power supply to a load**

(30) Priority: 16.01.2008 GB 0800737
(71) Applicant: Flexible Energy Limited, Chester CH1 6ES (GB)
(72) Inventor: Lees, Michael I., Dr., Chester CH1 6ES (GB)
(74) Representative: Wilson Gunn

(57) **Abstract**

A system is provided for controlling use of power supplied by a generator system 13 by an electrical load 11. The system comprises a load management system 14 in combination with a control and communication device 12 local to load 11. The delivery of power to said loads 11 is controlled by the load management system 14 in response to the cost of and the demand for power.

## Description

This invention relates to a system for controlling the supply of power to a load which requires power to operate.

At the present time, the domestic production of usable power in the United Kingdom is declining and therefore it is becoming increasingly necessary to import power from overseas to fulfil the requirements of the market. Also, because of the greater demand for importation, the cost of power in the UK has risen to relatively high levels and is likely to rise again.

Further, the production of power from renewable sources (e.g. wind) tends to have variable level of output which is difficult to predict. Therefore if renewable sources of power generation are used, it is a usual requirement for there to be an acceptable back-up or reserve source of power, to enable a predictable level of supply to be maintained. This increases the cost of power from renewable sources.

It has been realised by the present Applicants that if it were possible to control selected loads to reduce demand when the output from renewable sources falls, increase demand when the output from the renewable sources increases, this would promote the use of renewable sources of lower carbon generation to satisfy demand. Moreover the requirement for a back-up or reserve source of power would be reduced, reducing overall costs in the generation of electricity.
Additionally, it would enable the movement of demand from peak periods to periods of lower demand enabling low cost energy to be utilised to satisfy demand.

Whilst the size, and hence requirements, for the supply to individual domestic loads is small compared to the needs for power from other systems, if there are sufficient number of these loads then the combined effect can be comparable to a group of typical size generators.

It has been realised by the present Applicants that effective control of the supply to a large number of aggregated loads can result in a more efficient and less expensive supply of power.

Thus and in accordance with a first aspect of the present invention therefore there is provided a system for supplying power to an electrical load which requires such power to operate, said power being drawn from a power generation system and being delivered to said electrical load by a delivery means, wherein said delivery means comprises an arrangement which is operable to arrange delivery of power to said electrical load via a load management system, said system comprising a management controller linked to said power generation system and a device which operates to control supply of power to said electrical load, said supply of power being in accordance with absolute demand for power and costs of the power at the time of delivery.

With such a system it is possible to more effectively control use of power by a load to produce savings on the cost and quantity of power used.

Preferably, the receiver is separate but attached to the load which is the ultimate user of the power supplied by the system. Furthermore, the receiver preferably acts to control power delivery from the network to the device.

Furthermore, in accordance with a second aspect of the present invention, there is provided a method of supplying power to an electrical load which requires such power to operate comprising, drawing power sufficient for the demand of the electrical load from a power generation system, delivering the power drawn from the power generation system in appropriate quantities to the electrical load, managing the delivery of said power via a management controller which is linked to the power generation system and the electrical load, said supply of power being in accordance with absolute demand for power and cost of the power at the relevant time of delivery.

The invention will now described further by way of example only and with reference to the accompanying drawings, the single figure of which shows a schematic representation of the system of one embodiment of the present invention and also the method of operation of such a system.

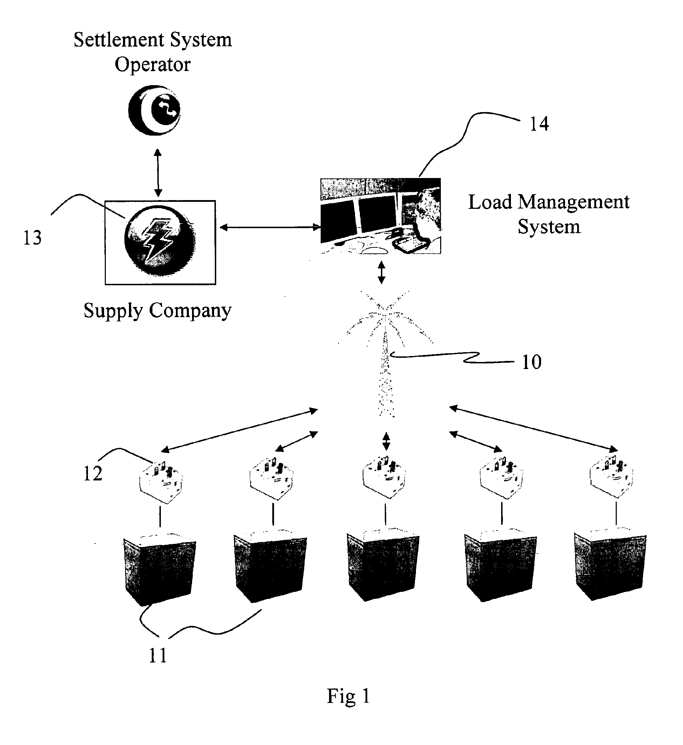

Referring to Fig. 1, a schematic representation of one embodiment of system in accordance with the present invention is shown. In the embodiment illustrated, the load 11 comprises a domestic freezer but of course, the load 11 can be of any type or kind as desired or as appropriate.

The system comprises a number of domestic freezers 11 which are linked via a remote control and communication device 12 (in this example using RF link 10) with a load management system 14 that controls supply of power to each respective load 11. The load management system 14 is linked to a source of electrical power. This could, for example, be a power supply company 13 which has a contractual obligation to supply power at an agreed commercial rate. It is known in relation to domestic freezers that, in order to maintain the temperature within the freezer at a level where the contents will not perish, the load does not require a constant supply of power. In fact, a freezer door, if kept closed, enables the freezer to retain its temperature at such a level for 12-24 hours depending upon the freezer. Consequently, a freezer can be disconnected, and draw no power, over extended periods of time without any risk to the contents. This "off' period reduces the burden on the supply companies by reducing the requirement. Although individual freezers cycle through periods when they draw power and periods when they do not draw power, as determined by their individual thermostats, the switching of each freezer is uncorrelated with any other freezer but is stochastic and hence the sum of the power drawn by a large number of freezers is essentially constant and can be accurately calculated within a known margin or error.

The load management system 14 would ideally operate to control power delivery to a large number of loads (preferably a few million) to enable the best times for delivery of that power to loads which require it.

The load management system 14, using knowledge of historical electricity trading prices in the balancing market and movement of electricity prices in the balancing market over a number of trading settlement periods in the recent past would calculate a value for a given reduction of demand for each of a number of trading settlement periods in the near future. These values would be used by the power supply company 13 to decide whether to purchase electricity from the balancing market or to reduce demand. If the power supply company 13 decided to reduce demand for any given trading settlement period then the load management system 14 would be instructed that on the next settlement period boundary for that given trading settlement period to cause the remote control and communication device 12 to disconnect the domestic freezers 11 from electricity supply for the duration of the given trading settlement period.

In another embodiment the load 11 could be a domestic washing machine or dish washer appliances. The users of the appliances would be aware that after they instruct the appliance to start its cycle the actual start time would be delayed until an optimum time (within a reasonable time limit). The load management system 14, using knowledge of historical electricity trading prices in the balancing market and movement of electricity prices in the balancing market over a number of trading settlement periods in the recent past would calculate a value for a given increase of demand for each of a number of trading settlement periods in the near future. These values would be used by the power supply company 13 to decide whether to offer an increased demand bid to the balancing market. If the bid was accepted then the load management system 14 would be instructed that on the next settlement period boundary for that given trading settlement period to cause the remote control and communication device 12 to connect the washing machines and dishwashers 11 to electricity supply for the duration of the given trading settlement period.

The load management system 14 further is in contact with each load 11, and in particular the communication device 12 associated with each respective load 11 and the connection between system 14 and the communication device 12 can be by use of a broadcast device such as a radio tele-switch or similar.

One or more of the loads 11 can be arranged to be capable of communicating with the load management system 14 in a two way manner. Such a link is of considerable value to the system since it allows data relating to use of power by the loads 11 to be collected and is valuable as feedback to the load management system 14 as to the extent of use of the power by the load 11 in real time. From this information, any excess power can be determined and identified and offered to other load management systems controlling other load devices. It will be realised that by proceeding in this way, the best use of generated power can be made. In fact information obtained by two-way communication with the system from system loads can also feed back operational status/condition of the load 11 and also the effectiveness of the system to the load management system which can act on the basis of such information to ensure that the communication devices 12 operate as they should do. If a system extends to such a size, rather than monitor the operation of individual devices 11, it can be arranged for the load management system 14 to monitor operations of a group of loads and such information can be utilised in the same manner as that which would be obtained from individual communication devices 12.

Whilst in the description above the means of communication is described as being a radio controlled switching arrangement, it will be appreciated that any other form of link, preferably wireless, can be utilised to allow the load management system to communicate with the devices associated with the individual, or groups of, loads and therefore for example can comprise GPRS systems, GSM systems, SMS, EDGE or other suitable means of communication between the device and the load management system 14.

It will be appreciated that a number of significant advantages can be obtained by the system of the present invention which will impact on ecological issues and as the reduction in need for new power generators follows from use of this system, there would be a reduction in peak demand for power reducing the strain on the generators of such power. The system also avoids the generation of large CO₂ emissions into the environment with obvious consequences. The system also provides for a better security of the power supplies systems in the country due to the much closer monitoring and reduced size of use.

It will of course be understood that the invention is not intended to be restricted to the details of the above embodiment which is described by way of example only.

## Claims

1. A system for supplying power to an electrical load which requires such power to operate, said power being drawn from the power generation system and being delivered to said electrical load by a delivery means, and wherein said delivery means comprises an arrangement which is operable to arrange delivery of power to said electrical load via a load management system said system comprising a management controller linked to said power generation system and a device which operates to control supply of power to said electrical load, said supply of power being in accordance with absolute demand for power and the costs of the power at the time of delivery.

2. A system according to claim 1 in which the device is separate to but attached to the load which is ultimately the user of the power supplied by the system.

3. A system according to any preceding claim in which the device acts to control power delivery from the network to the electrical load.

4. A system according to any preceding claim in which the management controller is linked to the device via a wireless link.

5. A method of supplying power to an electrical load which requires such power to operate comprising drawing power sufficient for the demand of the electrical load from a power generation system, delivering the power drawn from the power generation system in appropriate quantities to the electrical load, managing the delivery of said power via a management controller which linked to the power generation system and the electrical load, said supply of power being in accordance with the absolute demand for power and costs of the power that the relevant time of delivery.
